(19) Europäisches Patentamt

European Patent Office

Office européen des brevets

(11) **EP 1 408 013 A2**

(12) **EUROPEAN PATENT APPLICATION**

(43) Date of publication:
**14.04.2004 Bulletin 2004/16**

(51) Int Cl.[7]: **C03C 3/087**, C03C 4/08, C03C 4/02

(21) Application number: **03022668.2**

(22) Date of filing: **07.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **07.10.2002 JP 2002294033**

(71) Applicant: **Nippon Sheet Glass Co., Ltd.**
**Osaka-shi, Osaka (JP)**

(72) Inventors:
• **Seto, Hiromitsu, Nippon Sheet Glass Co., Ltd.**
  **Osaka-shi Osaka (JP)**
• **Yamamoto, Nobuyuki,**
  **Nippon Sheet Glass Co., Ltd.**
  **Osaka-shi Osaka (JP)**

(74) Representative: **HOFFMANN - EITLE**
**Patent- und Rechtsanwälte**
**Arabellastrasse 4**
**81925 München (DE)**

(54) **Ultraviolet and infrared ray absorbing colored glass plate**

(57)    To provide an ultraviolet and infrared ray absorbing green glass suitable as a window glass for automobiles, which does not substantially contain an expensive raw material whose recycling is difficult, can exhibit an optimum ultraviolet and infrared ray absorption when used in a thin plate having a thickness of not more than 3.5 mm, and has a low excitation purity, the ultraviolet and infrared ray absorbing colored glass plate having: a soda-lime silicate glass formulation substantially free from $CeO_2$; and a thickness (t mm) of from 1.0 to 3.5 mm; containing 0.96 to 1.25 %, in terms of $Fe_2O_3$, of total iron oxide ($T\text{-}Fe_2O_3$) and 0.0001 to 0.005 % of CoO, as coloring components, with $FeO/T\text{-}Fe_2O_3$ falling within the range represented by the relational equation with respect to the thickness and falling within the range represented by the relational equation with respect to the content of $T\text{-}Fe_2O_3$; and when the glass plate has a thickness of 2.6 mm, having a specified visible light transmittance, total solar energy transmittance, ultraviolet ray transmittance, dominant wavelength and excitation purity.

**Description**

FIELD OF THE INVENTION

The present invention relates to an ultraviolet and infrared ray colored glass plate, and especially to a colored glass suitable for automotive window glass, which has a sufficient visible light transmittance and an excellent ultraviolet and infrared ray absorption and has a green color tone.

BACKGROUND OF INVENTION

In recent years, drastic lightening of automotive parts is being advanced from consideration into the environment. The same is also applicable to automotive window glasses. While glasses having a thickness of 4 mm (an actual thickness: between 3.8 and 3.9 mm) have hitherto been mainly used, in recent years those having a thickness of 3.5 mm or 3.1 mm are mainly used. This tendency will further progress, and it may possibly be estimated that those having a thickness between 2.1 and 2.6 mm are mainly used in the future.

To prevent fading of car interiors or suntan of a driver, an ultraviolet ray absorption is imparted to automotive window glasses. Also, in many cases, for reducing a load of air conditioning for the purpose of energy saving, an infrared ray absorption is imparted at the same time.

Among them, automotive front window glasses are bound to have a visible light transmittance of 70 % or more to keep visibility of a driver. If it is intended to impart an ultraviolet and infrared ray absorption to such a glass, an absorption end of ultraviolet rays and an absorption end of infrared rays cause tailing, and hence, the glass has a greenish tinge.

Technologies of containing metal ions such as titanium and cerium as an ultraviolet ray absorber in a glass are known by, for example, JP-A-3-187946 (the term "JP-A" as used herein means an "unexamined published Japanese patent application). On the other hand, without using such components, glasses to which an ultraviolet and infrared ray absorption is imparted mainly by absorption with ferrous oxide and ferric oxide, are also known.

For example, the glass composition disclosed in JP-A-7-330371 contains from 0.75 to 1.4 % by weight of total iron in a form of $Fe_2O_3$ and from 0.25 to 0.32 % by weight of iron (II) in a form of FeO and has a total light transmittance ( TLA) under a light source A of at least 70 %, a total energy transmittance (TE) of less than about 46 %, and an ultraviolet ray transmittance of less than about 25 % at a thickness of from 3 to 3.3 mm.

Also, the infrared and ultraviolet ray absorbing glass disclosed in JP-A-4-231347 has a base glass composition containing from 68 to 75 % of $SiO_2$, from 10 to 20 % of $Na_2O$, from 5 to 15 % of CaO, from 0 to 5 % of MgO, from 0 to 5 % of $Al_2O_3$, and from 0 to 5 % of $K_2O$ and contains a colorant consisting essentially of less than 0.5 % of $CeO_2$ and 0.85 % or more of total iron ($Fe_2O_3$), with an FeO/total iron ratio being not more than 0.275, in terms of weight percentages, and exhibits an ultraviolet ray transmittance (between 300 and 390 nm) of not more than 31 % and a luminous transmittance (Illuminant A) of at least 70 % at a standard thickness of 3.9 mm.

In the glass composition disclosed in JP-A-7-330371, the FeO content is relatively high. Accordingly, there was involved an inconvenience such that in a usual furnace for glass melting, a major portion of heat of a burner is absorbed in the upper molten glass, and heating to the bottom of the furnace becomes insufficient, resulting in a remarkable reduction in production efficiency.

Further, with respect to the color tone of the resulting glass, the glass composition disclosed in JP-A-7-330371 is a glass having a strong greenish tinge and a high excitation purity. Accordingly, in some case, this glass was not preferable in application to automotive window glasses from the design viewpoint.

Moreover, since the infrared and ultraviolet ray absorbing glass disclosed in JP-A-4-231347 has a composition and characteristics so as to have a visible light transmittance at 3.9 mm of 70 % or more, there was involved an inconvenience such that the thinner the glass thickness, the higher both the total solar energy transmittance and the ultraviolet rays transmittance are, and hence, such is not the preferable characteristics. Also, in this infrared and ultraviolet ray absorbing glass, in order to obtain FeO/T-$Fe_2O_3$ of not more than 0.275, it is recommended to add less than 0.5 % by weight of an oxidizing agent, for example, from 0.20 to 0.35 % by weight of $CeO_2$. $CeO_2$ enhances the ultraviolet ray absorption, but it is very expensive, leading to an increase of the costs.

Additionally, in recent years, from the viewpoint of reducing a load to the environment, recycling of glasses has become widely noticed. The addition of cerium as a scarce resource to the glass is large in a load to the costs, and cerium is a raw material that is rarely used in other glasses. Accordingly, in order to use the recycled cullet as a raw material, it is required to fractionate it from a cerium-free glass cullet and recover and use it, leading to an inconvenience such that recycling thereof becomes difficult.

## SUMMARY OF THE INVENTION

Under these circumstances of the related art, the invention has been made. An object of the invention is to provide an ultraviolet and infrared ray absorbing green glass suitable as a window glass for automobiles, which does not substantially contain expensive $CeO_2$ as a raw material whose recycling is difficult, can exhibit an optimum ultraviolet and infrared ray absorption when used in a thin plate having a thickness of not more than 3.5 mm, and has a low excitation purity.

The invention is an ultraviolet and infrared ray absorbing colored glass plate having: a soda-lime silicate glass composition substantially free from $CeO_2$; and a thickness (t mm) of 1.0 to 3.5 mm, the colored glass plate comprising: in % by weight,

as coloring components,

0.96 to 1.25 % of total iron oxide in terms of $Fe_2O_3$ ($T$-$Fe_2O_3$); and

0.0001 to 0.005 % of CoO,

where $FeO/T$-$Fe_2O_3$ falls within the range represented by the following equation (1) with the thickness (t mm):

$$- 0.048t + 0.288 \leq [FeO/T\text{-}Fe_2O_3] \leq -0.092t + 0.532 \qquad (1)$$

and $FeO/T$-$Fe_2O_3$ falls within the range represented by the following equation (2) with the content of $T$-$Fe_2O_3$ ([$T$-$Fe_2O_3$] %):

$$- [T\text{-}Fe_2O_3]/6 + 0.36 \leq [FeO/T\text{-}Fe_2O_3] \leq -[T\text{-}Fe_2O_3]/6 + 0.425 \qquad (2)$$

wherein, when the glass plate has a thickness of 2.6 mm, the glass plate has: a visible light transmittance (YA) of 55 to 80 %; a total solar energy transmittance (TG) of 30 to 55 %; an ultraviolet ray transmittance (Tuv) as defined according to ISO 9050 of not more than 25 %; a dominant wavelength ($\lambda$d) of from 490 to 535 nm; and an excitation purity (Pe) of not more than 3.5 %.

## DETAILED DESCRIPTION OF THE INVENTION

The ultraviolet and infrared ray absorbing colored glass composition of the invention is described below. The following composition is expressed in terms of % by weight. The coloring components are described at first.

Iron oxide is present in the state of $Fe_2O_3$ and FeO in the glass. $Fe_2O_3$ enhances an ultraviolet ray absorption, and FeO enhances a IR rays absorption. For enhancing the ultraviolet and IR ray absorption and enhancing a visible light transmittance, it is necessary to keep total iron oxide ($T$-$Fe_2O_3$) 0.96 to 1.25 %. When $T$-$Fe_2O_3$ is less than 0.96 %, an absorption of ultraviolet rays and infrared rays is small so that desired optical characteristics are not obtained. On the other hand, when $T$-$Fe_2O_3$ exceeds 1.25 %, a visible light transmittance lowers. It is preferable that $T$-$Fe_2O_3$ is between 1.0 and 1.25 %.

When the $FeO/T$-$Fe_2O_3$ weight ratio is too small, since the FeO content is small, IR ray absorption is insufficient. Further, since the glass melting state is shifted to the oxidation side, bubbles are liable to occur, leading to a reduction of the yield during the production. In contrast, when the $FeO/T$-$Fe_2O_3$ weight ratio is too large, the visible light transmittance lowers, the color tone becomes bluish, and the excitation purity becomes high. Also defects, such as nickel sulfide stone, a silica-rich streaks, or silica scum, are occurred. Accordingly, such is not preferable. When the content of $T$-$Fe_2O_3$ is high, it is preferable that the FeO content (% by weight) occupying in the total iron content (% by weight), i.e., $FeO/T$-$Fe_2O_3$ proportion, is small. Moreover, a preferred range of the $FeO/T$-$Fe_2O_3$ varies depending upon the thickness of the glass plate, and when the glass plate thickness is large, it is preferable to make the lower and upper limits of this ratio low.

To keep high ultraviolet rays absorption with the low excitation purity, it is necessary that $FeO/T$-$Fe_2O_3$ falls within the range represented by the equation (1) with the thickness (t mm) and within the range represented by the equation (2) with the $T$-$Fe_2O_3$ content, respectively. In the invention, by keeping the $FeO/T$-$Fe_2O_3$ ratio within the ranges represented by the equations (1) and (2), it is possible to stably obtain a glass having a high ultraviolet and IR ray absorption and having a green color tone. In this case, the FeO content refers to a numerical value in terms of $Fe_2O_3$.

When the FeO content ($Fe^{2+}$ content) increases, the $Fe^{3+}$ content that is a component of enhancing the ultraviolet rays absorption decreases. Accordingly, to keep the ultraviolet rays absorption, it is necessary that the FeO content is a certain value or less. Also, when the FeO content is too large, since the molten glass in a melting tank absorbs IR rays, the temperature of the bottom of the melting tank decreases to cause the occurrence of devitrification, and stirring of the molten glass is likely hindered. To keep the ultraviolet ray absorption of the glass and to make the productivity consistent with the ultraviolet ray absorption, the FeO content is preferably not more than 0.26 % by weight, and more preferably not more than 0.24 % by weight.

$TiO_2$ and $CeO_2$ are not substantially contained in the composition. Though the both are a component of enhancing the ultraviolet rays absorption, use thereof not only pushes up the raw material costs but also makes recycling of the glass difficult, thereby increasing a load to the environment. $TiO_2$ may possibly be contained in an amount of less than 0.1 % as an impurity in raw materials such as silica sand and a blast furnace slag. Also, since $CeO_2$ is contained in a recycled cullet, etc., it may possibly be contained in an amount of less than 0.01 %. However, any of these substances do not hinder the true nature of the invention. In the invention, the term "substantially free from $CeO_2$" means that the $CeO_2$ content is less than 0.01 %. In the invention, the term "substantially free from $TiO_2$" means that the $TiO_2$ content is less than 0.1 %.

CoO is a component to obtain a green color tone and reduce the excitation purity when used together with $Fe_2O_3$, and is also a component of controlling the visible light transmittance. The CoO content is between 0.0001 and 0.005 %, and preferably between 0.0004 and 0.0025 %.

Where a very few amount of CoO is added to the glass, it is difficult to charge a CoO powdered raw material into a melting furnace and homogenize the molten glass. The glass raw material comprises a batch raw material and a glass cullet. It is preferable to molt and form that a glass raw material in which at least a part, and preferably 10 % or more of the necessary amount of CoO in a glass is supplied from a CoO-containing glass cullet. As the CoO-containing glass cullet, ones in which CoO is contained as a glass component in the glass, or in which a CoO-containing thin film is coated on the glass, may be employed. By utilizing the CoO-containing cullet as at least a part of the CoO raw material, it is possible to prevent hindrance of homogeneity of the molten glass as caused due to the charge of a very few amount of a CoO powdered raw material and to lower the amount of the cullet as an industrial waste, thereby reducing a load to the environment.

In addition, to obtain the desired color and property of the invention, it is possible to add 0.0002 % or more in total of at least one component selected from the group consisting of Se, $Cr_2O_3$, and NiO as a coloring agent. For recycling the glass, it is preferable to suppress the addition amount to not more than 0.01 %. Also, it is possible to add 0.0002 % or more in total of at least one component selected from the group consisting of CuO and $Mn_2O_3$ as a coloring agent. For recycling the glass, it is preferable to suppress the addition amount to not more than 0.2 %.

Next, the respective components of the soda-lime silicate glass as a base glass composition are described below.

$SiO_2$ is the major component of forming a network of the glass. When the $SiO_2$ content is less than 65 %, durability of the glass lowers, whereas when it exceeds 80 %, melting of the glass becomes difficult.

$Al_2O_3$ is a component of enhancing the durability of the glass, and its preferred content is from 0 to 5 %. When the $Al_2O_3$ content exceeds 5 %, melting of the glass becomes difficult. A preferred content of $Al_2O_3$ is in the range of 1 % or more and less than 3 %.

For the sake of enhancing the durability of the glass and adjusting the devitrification temperature and viscosity during forming, it is preferable that MgO is used in a content of from 0 to 10 %. When the MgO content exceeds 10 %, the devitrification temperature raises. For the sake of enhancing the durability of the glass and adjusting the devitrification temperature and viscosity during forming, it is preferable that CaO is used in a content of from 5 to 15 %. When the CaO content is less than 5 % or exceeds 15 %, the devitrification temperature raises. The sum of MgO and CaO is from 5 to 15 %, and when the sum of MgO and CaO is less than 5 %, the durability lowers, whereas when it exceeds 15 %, the devitrification temperature raises.

In the case where the sum of MgO and CaO is kept constant, by making the MgO content low as far as possible and the CaO content high as far as possible, a coefficient of thermal expansion and a Young's modulus of the glass are enhanced, whereby tempering properties are enhanced. However, MaO is displaced with CaO such that the MgO content becomes substantially 0, amber coloration is liable to occur, and the glass tends to have undesirably a brownish tinge. For this reason, it is preferable that the MgO content is 1.0 to 1.9 %.

$Na_2O$ is a component of promoting melting of the glass and is preferably contained in an amount of 10 to 20 %. When the $Na_2O$ content is less than 10 %, the melting promoting effect is poor, whereas when it exceeds 20 %, the durability of the glass lowers. Similar to $Na_2O$, $K_2O$ is a component of promoting melting of the glass and is preferably contained in an amount of 0 to 5 %. When the $K_2O$ content is too high, the costs become high, and hence, it is desired to control the $K_2O$ content to not more than 5 %. The sum of $Na_2O$ and $K_2O$ is 10 to 20 %. When the sum of $Na_2O$ and $K_2O$ is less than 10 %, the melting promoting effect is poor, whereas when it exceeds 20 %, the durability of the glass lowers. $Na_2O$ is also a component of enhancing the coefficient of thermal expansion and the tempering properties. In glass plates having a thickness of not more than 2.5 mm, since tempering effect becomes small, it is preferable that $Na_2O$ is contained 14 % or more.

$B_2O_3$ is a component used for enhancing the durability of the glass or as a dissolution assistant and also has an action to strengthen the absorption of ultraviolet rays, and is preferably contained in an amount of from 0 to 5 %.

When the $B_2O_3$ content exceeds 5 %, inconveniences occur during forming due to volatilization of $B_2O_3$ and the like.

The glass of the invention is mainly formed by the float method, and sulfate is usually used as an oxidizing agent and/or a refining agent. Accordingly, it is preferable that the sulfate is contained in an amount of from 0.1 to 0.4 % in terms of $SO_3$ in the glass.

More preferably, the base glass composition comprises from 65 to 78 % of $SiO_2$, 1 % or more and less than 3 % of $Al_2O_3$, from 1.0 to 1.9 % of MgO, from 5 to 15 % of CaO (provided that the sum of MgO and CaO is from 6 to 15 %), from 14 to 20 % of $Na_2O$, from 0 to 5 % of $K_2O$ (provided that the sum of $Na_2O$ and $K_2O$ is from 10 to 20 %), from 0.1 to 0.4 % of $SO_3$, and from 0 to 5 % of $B_2O_3$ on a weight basis.

When reduced into a thickness of 2.6 mm, the glass plate of the invention has a visible light transmittance (YA) between 55 and 80 %, a total solar energy transmittance (TG) between 30 and 55 %, an ultraviolet ray transmittance (Tuv), as defined according to ISO 9050, of not more than 25 %, a dominant wavelength ($\lambda$d) between 490 and 535 nm, and an excitation purity (Pe) of not more than 3.5 %. Especially, it is preferable that the glass plate of the invention has properties so as to have a YA between 60 and 75 %, a TG between 35 and 55 %, and a Tuv between 5 and 20 %.

The major utility of the glass plate of the invention is an automotive window glass, and in window glasses other than windshields, in general, it is preferable that the glass plate is subjected to tempering for the safety. Also, by laminating at least one layer made of the glass plate of the invention and at least one layer made of a resin, for example, a pan comprising two layers of the glass plate of the invention having a resin layer laminated therebetween can be used as a laminated glass for windshields and other window glasses.

The invention will be more specifically described below with reference to the following Examples and Comparative

Examples.

[Examples 1 to 9 and Comparative Examples 1 to 5]

A typical soda-lime silica glass batch component was properly mixed with ferric oxide, cerium oxide, cobalt oxide, nickel oxide, chromium oxide, a carbonous reducing agent (such as a carbon powder), and a cobalt oxide-free cullet, a cobalt oxide-containing cullet, and a cullet coated with a cobalt oxide-containing thin film, and the mixture was heated and melted in an electric furnace at 1,500 °C. Four hours after melting, the molten glass was cast on a stainless steel plate and annealed to room temperature to obtain a glass plate having a thickness of about 6 mm. Subsequently, this glass plate was polished such that the thickness became 2.6 mm, to prepare a sample. In each of the Examples and Comparative Examples, the weight ratio of the cullet occupying in the glass article was made constant at 25 %. And the whole of CoO contained in the glass sample in each of Examples 1 to 7 was derived from the cobalt oxide-containing cullet and the cullet coated with a cobalt oxide-containing thin film; and the whole of CoO contained in the glass sample in each of Examples 8 and 9 was derived from the cobalt oxide powder. Also, $FeO/T$-$Fe_2O_3$ was adjusted by changing the amount of the carbonous reducing agent.

As optical properties, the resulting samples were measured for a visible light transmittance YA (%) using the CIE Standard illuminant A and a total solar energy transmittance TG (%)using the CIE Standard illuminant A, an ultraviolet ray transmittance Tuv (%) as defined according to ISO 9050, a dominant wavelength $\lambda$d (nm) using the CIE Standard illuminant C, and an excitation purity Pe (%)using the CIE Standard illuminant C and also examined for a lightness $L^*$ and chromaticities $a^*$ and $b^*$ under $L^*a^*b^*$ color system using the CIE Standard illuminant C.

Tables 1 to 3 show the base glass formulation, coloring agent concentration, $FeO/T$-$Fe_2O_3$, ranges of $FeO/T$-$Fe_2O_3$ calculated from the foregoing equations (1) and (2), optical properties. The compositions in the tables were expressed % by weight. Examples 1 to 9 were expressed the lightness $L^*$ and chromaticities $a^*$ and $b^*$, and were visually evaluated with respect to streak and ream according to the following criteria of three grades (A to C).

Irregular color:

   A: No streak was observed at all.
   B: Streak was slightly observed.
   C: Streak was considerably observed.

Ream:

A: No ream was observed at all.
B: Reams were slightly observed.
C: Reams were considerably observed.

With respect to the samples of Examples 5 and 6, separately from those for the measurement of the optical properties, a sample was polished into a thickness of 2.6 mm, again heated to near the softening point, and then cooled by blowing air for tempering. After the tempering, the sample was measured for surface compression stress.

Table 1

| | Example 1 | Example 2 | Example 3 | Example 4 | Example 5 |
|---|---|---|---|---|---|
| Formulation (wt %) | | | | | |
| $SiO_2$ | 70.7 | 70.7 | 70.7 | 70.7 | 70.7 |
| $Al_2O_3$ | 1.29 | 1.29 | 1.29 | 1.29 | 1.29 |
| MgO | 3.57 | 3.57 | 3.57 | 3.57 | 3.57 |
| CaO | 8.35 | 8.35 | 8.35 | 8.35 | 8.35 |
| $Na_2O$ | 14.35 | 14.35 | 14.35 | 14.35 | 14.35 |
| $K_2O$ | 0.73 | 0.73 | 0.73 | 0.73 | 0.73 |
| $SO_3$ | 0.19 | 0.18 | 0.20 | 0.22 | 0.20 |
| $T\text{-}Fe_2O_3$ | 0.97 | 0.98 | 1.10 | 1.20 | 1.25 |
| FeO | 0.21 | 0.22 | 0.24 | 0.22 | 0.23 |
| $FeO/T\text{-}Fe_2O_3$ | 0.22 | 0.22 | 0.22 | 0.18 | 0.18 |
| $CeO_2$ | 0.005 | 0.005 | 0.005 | 0.005 | 0.005 |
| $TiO_2$ | 0.05 | 0.03 | 0.03 | 0.03 | 0.03 |
| CoO (ppm) | 10 | 12 | 5 | 17 | 20 |
| NiO (ppm) | 0 | 0 | 0 | 0 | 0 |
| $Cr_2O_3$ (ppm) | 0 | 0 | 0 | 0 | 0 |
| $FeO/T\text{-}Fe_2O_3$: Range of the equation (1) | 0.163 to 0.293 | 0.154 to 0.274 | 0.163 to 0.293 | 0.163 to 0.293 | 0.163 to 0.293 |
| $FeO/T\text{-}Fe_2O_3$: Range of the equation (2) | 0.198 to 0.263 | 0.197 to 0.262 | 0.177 to 0.242 | 0.160 to 0.225 | 0.152 to 0.217 |
| CoO Raw material | Cullet | Ditto | Ditto | Ditto | Ditto |
| Homogeneity | | | | | |
| Streak | A | A | A | A | A |
| Ream | B | B | B | B | B |
| Thickness (mm) | 2.6 | 2.8 | 2.6 | 2.6 | 2.6 |
| Optical characteristics | | | | | |
| YA(%) | 75.9 | 74.4 | 74.6 | 72.8 | 71.0 |
| TG(%) | 54.7 | 51.8 | 51.5 | 52.6 | 50.1 |
| Tuv (%) | 22.4 | 20.9 | 18.8 | 16.0 | 14.7 |
| L* | 90.39 | 89.78 | 89.81 | 88.94 | 88.15 |

Table 1   (continued)

|  | Example 1 | Example 2 | Example 3 | Example 4 | Example 5 |
|---|---|---|---|---|---|
| Formulation (wt %) |  |  |  |  |  |
| a* | -7.52 | -6.70 | -8.58 | -8.23 | -8.88 |
| b* | 0.38 | 0.13 | 1.54 | 1.52 | 1.31 |
| λd (nm) | 502.3 | 497.0 | 513.7 | 512.5 | 507.5 |
| Pe (%) | 2.2 | 3.0 | 2.0 | 2.0 | 2.3 |
| Stress value (MPa) | - | - | - | - | 115 |

Table 2

|  | Example 6 | Example 7 | Example 8 | Example 9 |
|---|---|---|---|---|
| Formulation (wt %) |  |  |  |  |
| $SiO_2$ | 69.3 | 70.7 | 70.7 | 69.3 |
| $Al_2O_3$ | 2.50 | 1.29 | 1.29 | 2.50 |
| MgO | 1.60 | 3.57 | 3.57 | 1.60 |
| CaO | 8.85 | 8.35 | 8.35 | 8.85 |
| $Na_2O$ | 15.39 | 14.35 | 14.35 | 15.39 |
| $K_2O$ | 0.93 | 0.73 | 0.73 | 0.93 |
| $SO_3$ | 0.22 | 0.18 | 0.20 | 0.22 |
| $T\text{-}Fe_2O_3$ | 1.05 | 1.10 | 1.25 | 1.05 |
| FeO | 0.21 | 0.22 | 0.23 | 0.21 |
| $FeO/T\text{-}Fe_2O_3$ | 0.20 | 0.20 | 0.18 | 0.20 |
| $CeO_2$ | 0.005 | 0.005 | 0.005 | 0.005 |
| $TiO_2$ | 0.06 | 0.03 | 0.03 | 0.06 |
| CoO (ppm) | 6 | 16 | 20 | 6 |
| NiO (ppm) | 25 | 0 | 0 | 25 |
| $Cr_2O_3$ (ppm) | 0 | 8 | 0 | 0 |
| $FeO/T\text{-}Fe_2O_3$: Range of the equation (1) | 0.163 to 0.293 | 0.163 to 0.293 | 0.163 to 0.293 | 0.163 to 0.293 |
| $FeO/T\text{-}Fe_2O_3$: Range of the equation (2) | 0.185 to 0.250 | 0.177 to 0.242 | 0.152 to 0.217 | 0.185 to 0.250 |
| CoO Raw material | Ditto | Ditto | Batch | Ditto |
| Homogeneity |  |  |  |  |
| Streak | A | A | B | B |
| Ream | A | B | C | C |
| Thickness (mm) | 2.6 | 2.6 | 2.6 | 2.6 |
| Optical characteristics |  |  |  |  |
| YA (%) | 75.0 | 73.4 | 71.0 | 75.0 |
| TG (%) | 54.3 | 52.7 | 50.1 | 54.3 |
| Tuv (%) | 19.6 | 18.7 | 14.7 | 19.6 |
| L* | 90.13 | 89.28 | 88.15 | 90.13 |
| a* | -7.62 | -8.17 | -8.88 | -7.62 |

Table 2 (continued)

|  | Example 6 | Example 7 | Example 8 | Example 9 |
|---|---|---|---|---|
| Formulation (wt %) |  |  |  |  |
| b* | 1.75 | 0.75 | 1.31 | 1.75 |
| λd (nm) | 502.3 | 504.3 | 507.5 | 520.3 |
| Pe (%) | 1.9 | 2.2 | 2.3 | 1.9 |
| Stress value (MPa) | 125 | - | - | - |

Table 3

|  | Comparative Example 1 | Comparative Example 2 | Comparative Example 3 | Comparative Example 4 | Comparative Example 5 |
|---|---|---|---|---|---|
| Formulation (wt %) |  |  |  |  |  |
| $SiO_2$ | 70.57 | 71.88 | 71.88 | 72.10 | 72.10 |
| $Al_2O_3$ | 0.62 | 0.27 | 0.27 | 0.74 | 0.74 |
| MgO | 3.9 | 3.66 | 3.66 | 3.79 | 3.79 |
| CaO | 9.5 | 8.91 | 8.91 | 8.90 | 8.90 |
| $Na_2O$ | 13.9 | 13.47 | 13.47 | 14.16 | 14.16 |
| $K_2O$ | 0.09 | 0.08 | 0.08 | 0.11 | 0.11 |
| $SO_3$ | 0.2 | 0.2 | 0.2 | 0.20 | 0.20 |
| $T\text{-}Fe_2O_3$ | 0.95 | 0.898 | 1.132 | 1.270 | 1.2 |
| FeO | 0.285 | 0.220 | 0.182 | 0.267 | 0.348 |
| $FeO/T\text{-}Fe_2O_3$ | 0.300 | 0.245 | 0.161 | 0.210 | 0.290 |
| $CeO_2$ | 0.005 | 0.28 | 0.005 | 0.005 | 0.005 |
| $TiO_2$ | 0.03 | 0.03 | 0.03 | 0.03 | 0.03 |
| CoO (ppm) | 0 | 0 | 0 | 93 | 32 |
| NiO (ppm) | 0 | 0 | 0 | 0 | 0 |
| $Cr_2O_3$ (ppm) | 0 | 0 | 0 | 780 | 0 |
| $FeO/T\text{-}Fe_2O_3$: Range of the equation (1) | 0.163 to 0.293 | 0.163 to 0.293 | 0.163 to 0.293 | 0.163 to 0.293 | 0.163 to 0.293 |
| $FeO/T\text{-}Fe_2O_3$: Range of the equation (2) | 0202 to 0.267 | 0.210 to 0.275 | 0.171 to 0.236 | 0.148 to 0.213 | 0.160 to 0.225 |
| Thickness (mm) | 2.6 | 2.6 | 2.6 | 2.6 | 2.6 |
| Optical characteristics |  |  |  |  |  |
| YA (%) | 74.1 | 77.2 | 76.5 | 40.0 | 55.0 |
| TG(%) | 48.4 | 54.2 | 56.7 | 29.8 | 32.0 |
| Tuv(%) | 35.9 | 39.3 | 36.4 | 24.2 | 29.7 |
| λd (nm) | 495.6 | 484.8 | 521.5 | 497 | 495 |

Table 3  (continued)

| | Comparative Example 1 | Comparative Example 2 | Comparative Example 3 | Comparative Example 4 | Comparative Example 5 |
|---|---|---|---|---|---|
| Formulation (wt %) | | | | | |
| Pe (%) | 3.75 | 2.04 | 3.50 | 11.5 | 6.3 |

As shown in Tables 1 and 2, any of the samples of Examples 1 to 9 have optical properties so as to have a visible light transmittance (YA) between 55 and 80 %, a total solar energy transmittance (TG) between 30 and 55 %, an ultraviolet ray transmittance (Tuv), as defined according to ISO 9050, of not more than 25 %, a dominant wavelength ($\lambda$d) between 490 and 535 nm, and an excitation purity (Pe) of not more than 3.5 %. With respect to Examples 3 to 9, it is noted that since from 1.00 to 1.25 % by weight of $T\text{-}Fe_2O_3$ is contained, these compositions are especially excellent in ultraviolet rays absorption.

The surface compression was 115 MPa in Example 5 and 125 MPa in Example 6, respectively. Example 5 has a base glass composition having a high MgO content, and Example 6 has a base glass composition having a low MgO content and high CaO and $Na_2O$ contents. It is noted that Example 6 is a composition improved in the tempering properties as compared with Example 5.

Also, it is noted that Examples 1 to 7 in which the CoO raw material is supplied from a cullet are a glass that is small in streak and ream and excellent in homogeneity, as compared with Examples 8 and 9 in which the CoO raw material is supplied from a batch.

Since the glass of Comparative Example 1 shown in Table 3 falls outside the scope of the invention with respect to $T\text{-}Fe_2O_3$ and $FeO/T\text{-}Fe_2O_3$, not only the desired ultraviolet ray transmittance is not obtained, but also the excitation purity is high, and the tint is strong. Further, since the glass of Comparative Example 2 falls outside the scope of the invention with respect to $T\text{-}Fe_2O_3$ and $CeO_2$, not only the desired ultraviolet ray transmittance is not obtained, but also the costs are high. Since the glass of Comparative Example 3 falls outside the scope of the invention with respect to $FeO/T\text{-}Fe_2O_3$, not only the solar energy transmittance is high, and the infrared ray absorbing capability is inferior, but also the desired ultraviolet ray transmittance is not obtained. Since the glass of Comparative Example 4 is higher than the scope of the invention with respect to $T\text{-}Fe_2O_3$ and CoO, not only the visible light transmittance is low, but also the excitation purity is high, and the tint is strong. Since the glass of Comparative Example 5 is higher than the scope of the invention with respect to $FeO/T\text{-}Fe_2O_3$, not only the desired ultraviolet ray transmittance is not obtained, but also the excitation purity is high, and the tint is strong.

As described above in detail, according to the invention, it is possible to provide an ultraviolet and infrared ray absorbing glass having a high visible light transmittance and a greenish color tone, i.e., having a chromaticity a* of from - 9. 0 to -6. 0 and a chromaticity b* of from -0.10 to +1.80 under L*a*b* color system. Especially, it is possible to provide an ultraviolet and infrared ray absorbing green glass that is suitable for lightening of vehicle weight when used as an automotive window glass. Also, according to the invention, it is possible to provide an ultraviolet and infrared ray absorbing green glass that takes consideration into the environment and has a high quality.

This application is based on Japanese patent application JP 2002-294033, filed on October 7, 2002, the entire content of which is hereby incorporated by reference, the same as if set forth at length.

**Claims**

1. An ultraviolet and infrared ray absorbing colored glass plate having: a soda-lime silicate glass composition substantially free from $CeO_2$; and a thickness (t mm) of 1.0 to 3.5 mm, the colored glass plate comprising: in % by weight,
   as coloring components,
       0.96 to 1.25 % of total iron oxide in terms of $Fe_2O_3$ ($T\text{-}Fe_2O_3$); and
       0.0001 to 0.005 % of CoO,
   in which $FeO/T\text{-}Fe_2O_3$ falls within the range represented by the following equation (1) with respect to the thickness (t mm) :

$$- 0.048t+0.288 \leq [FeO/T\text{-}Fe_2O_3] \leq -0.092t + 0.532 \tag{1}$$

   and $FeO/T\text{-}Fe_2O_3$ falls within the range represented by the following equation (2) with respect to the content

of $T\text{-}Fe_2O_3$ ($[T\text{-}Fe_2O_3]$ %):

$$-[T\text{-}Fe_2O_3]/6+0.36 \leq [FeO/T\text{-}Fe_2O_3] \leq -[T\text{-}Fe_2O_3]/6+0.425 \qquad (2)$$

wherein, when the glass plate has a thickness of 2. 6 mm, the glass plate has: a visible light transmittance (YA) of 55 to 80 %; a total solar energy transmittance (TG) of 30 to 55 %; an ultraviolet ray transmittance (Tuv) as defined according to ISO 9050 of not more than 25 %; a dominant wavelength ($\lambda$d) between 490 and 535 nm; and an excitation purity (Pe) of not more than 3.5 %.

2. The ultraviolet and infrared ray absorbing colored glass plate according to claim 1, wherein the content of $T\text{-}Fe_2O_3$ is 1.00 to 1.25 % by weight.

3. The ultraviolet and infrared ray absorbing colored glass plate according to claim 1, which further comprises 0.0002 to 0.01 % of at least one component selected from the group consisting of Se, $Cr_2O_3$ and NiO, as coloring components.

4. The ultraviolet and infrared ray absorbing colored glass plate according to claim 1, which comprises: in % by weight, as base glass components,
   65 to 80 % of $SiO_2$;
   0 to 5 % of $Al_2O_3$;
   0 to 10 % of MgO;
   5 to 15 % of CaO;
   10 to 20 % of $Na_2O$;
   0 to 5 % of $K_2O$;
   0.1 to 0.4 % of $SO_3$; and
   0 to 5 % of $B_2O_3$,
   whrerein the sum of MgO and CaO is from 5 to 15 %, and the sum of $Na_2O$ and $K_2O$ is from 10 to 20 %.

5. The ultraviolet and infrared ray absorbing colored glass plate according to claim 1, which comprises: in % by weight, as base glass components,
   65 to 78 % of $SiO_2$;
   1 to 3 %, excluding 3 %, of $Al_2O_3$;
   1.0 to 1.9 % of MgO;
   5 to 15 % of CaO;
   14 to 20 % of $Na_2O$;
   0 to 5 % of $K_2O$;
   0.1 to 0.4 % of $SO_3$; and
   0 to 5 % of $B_2O_3$,
   whrerein the sum of MgO and CaO is from 6 to 15 %, and the sum of $Na_2O$ and $K_2O$ is from 10 to 20 %.

6. The ultraviolet and infrared ray absorbing colored glass plate according to claim 1, which is a glass plate prepared by melting and forming a glass raw material, in which the glass raw material includes a CoO-containing glass cullet as at least a part of a CoO raw material.

7. The ultraviolet and infrared ray absorbing colored glass plate according to claim 1, which is a glass plate prepared by melting and forming a glass raw material, in which the glass raw material includes a glass cullet coated with a CoO-containing thin film as at least a part of a CoO raw material.